# EUROPÄISCHE PATENTSCHRIFT

(11) **EP 2 104 790 B1**
(45) Veröffentlichungstag und Bekanntmachung des Hinweises auf die Patenterteilung: **21.09.2011**
(21) Anmeldenummer: 07847899.7
(22) Anmeldetag: 06.12.2007
(51) Int. Cl.: F16D 23/02, F16D 69/04

(54) **SYNCHRONRING EINER SYNCHRONISIEREINRICHTUNG**
SYNCHRONIZING RING OF A SYNCHRONIZING DEVICE
BAGUE DE SYNCHRONISATION D'UN DISPOSITIF DE SYNCHRONISATION

(30) Priorität: 23.12.2006 DE 102006061414
(43) Veröffentlichungstag der Anmeldung: 30.09.2009
(73) Patentinhaber: Schaeffler Technologies GmbH & Co. KG, 91074 Herzogenaurach (DE)
(72) Erfinder: KARAIS, Thomas, 90449 Nürnberg (DE); SCHWUGER, Josef, 77933 Lahr (DE); SPOERL, Marcus, 91126 Rednitzhembach (DE)
(86) Internationale Anmeldenummer: PCT/EP2007/063421
(87) Internationale Veröffentlichungsnummer: WO 2008/077734

(56) Entgegenhaltungen:
- WO-A-00/37815
- DE-A1- 3 705 657
- DE-A1- 4 130 984
- DE-A1- 19 718 905
- FR-A- 1 474 750
- US-A- 3 203 522

## Beschreibung

### Gebiet der Erfindung

Die Erfindung betrifft einen Synchronring einer Synchronisiereinrichtung eines Kraftfahrzeuggetriebes mit einem Ringkörper, welcher mehrere Ausnehmungen aufweist, wobei in den Ausnehmungen Reibelemente angeordnet sind.

### Hintergrund der Erfindung

Synchronringe eines Fahrzeuggetriebes sind in der Regel durch einen konisch ausgebildeten Reibring mit Reibflächen an seiner Innenmantelfläche oder seiner Außenmantelfläche gebildet. Weist der Reibring Reibflächen auf beiden Mantelflächen auf, bezeichnet man ihn auch als Zwischenring. Die Reibflächen eines Zwischenrings stehen während des Synchronisiervorganges am Außenmantel reibschlüssig mit einer am äußeren Synchronring ausgebildeten Reibfläche in Verbindung. Gleichzeitig steht eine an der Innenmantelfläche des Zwischenringes ausgebildete Reibfläche mit einer Reibfläche eines inneren Synchronrings im Reibschluss. Der äußere Synchronring ist formschlüssig mit dem Synchronkörper verbunden und greift beispielsweise über Mitnehmernasen, die an seiner im Durchmesser kleineren Seite ausgebildet und radial nach innen gerichtet sind, in Aussparungen des inneren Synchronringes. Der innere Synchronring ist somit über den äußeren Synchronring ebenfalls formschlüssig mit dem Synchronkörper verbunden.

Eine derartige Synchronisiervorrichtung besteht aus vielen Einzelteilen und ist daher aufwendig herzustellen. Für die Massenfertigung hat es sich als geeignet erwiesen, Synchronringe umformtechnisch aus Blech spanlos herzustellen. Die umformtechnisch hergestellten Ringe weisen jedoch zumeist eine Reibfläche auf, die den erforderlichen Genauigkeiten nicht genügt. In der Regel ist daher eine spanende Nachbearbeitung oder ein Honen erforderlich. Wird ein Reibbeleg auf eine Reibfläche aufgeklebt, so übertragen sich eventuelle Ungenauigkeiten des Ringkörpers auf die Reibfläche, die wiederum nachgearbeitet werden muss. Das Aufbringen eines Reibbelags durch beispielsweise Kleben ist daher aufwändig und kostenintensiv.

Zur Vermeidung dieses Problems in AT 107 755 vorgeschlagen, den Reibbelag in mehrere Elemente zu unterteilen und aus einer mehr oder weniger großen Anzahl solcher Elemente den Reibbelag von der jeweils gewünschten Größe und Form zusammenzusetzen. Der Reibring besteht aus einem Grundkörper mit Löchern, deren Wandungen kegelförmige Gestalt haben. In die Löcher werden Reibkörper eingeschoben. Auf dem Grundkörper wird ein kreisbogenförmiges Blech mittels Schrauben befestigt, und die Reibelemente werden auf der inneren Seite des Bleches formschlüssig gehalten. Bei diesem Reibring ist es erforderlich, dass die Reibkörper entweder durch relativ aufwändige und kompliziert zu montierende Hilfseinrichtungen formschlüssig gehalten werden oder aber einzeln kraftschlüssig befestigt werden. Beide Maßnahmen erfordern einen erheblichen Aufwand bei der Herstellung.

Ein weiterer gattungsgemäßer Synchronring ist aus der DE 37 05 657 A1 bekannt. Es wird ein Synchronring vorgestellt, der einen Grundkörper als Stützring aufweist und mit einem Reibbelag versehen ist, wobei der Reibbelag von einer Vielzahl von Reibkörpern zusammengesetzt ist, die über den Umfang der Reibfläche verteilt sind. Die Reibelemente sind in offene Ausnehmungen des Stützringes formschlüssig eingepresst. Dieses Verfahren eignet sich insbesondere für Sinterringe, aber nicht für alle Arten von Reibbelägen. Werden der Stützring und die Reibelemente nicht nachbearbeitet, so werden im Schaltbetrieb der Synchronisiereinrichtung einige Reibelemente sehr viel stärker belastet als andere, was zu einem Ausfall dieses Synchronrings führen kann.

### Aufgabe der Erfindung

Der Erfindung liegt daher die Aufgabe zugrunde, die im Stand der Technik geschilderten Nachteile zu vermeiden.

Erfindungsgemäß wird diese Aufgabe mittels des kennzeichnenden Teils des Anspruchs 1 dadurch gelöst, dass der Ringkörper einen Käfig bildet, der die Reibelemente in den Ausnehmungen führt, wobei die Reibelemente in den Ausnehmungen verschiebbar oder verdrehbar gehalten sind. Wird ein Gang geschaltet, so wird der Synchronring axial verschoben, und er liegt sowohl am Synchronkörper als auch am Gegenkonus, der direkt oder indirekt mit dem Gangrad verbunden ist, an. Dadurch dass die Reibelemente ihre Position bezüglich des Ringkörpers um ein kleines Spiel ändern können, ist es möglich, sowohl Fertigungsungenauigkeiten des Ringkörpers als auch die des Gegenkonus' auszugleichen. Vorteilhafterweise entfällt somit nicht nur die Nacharbeitung des Ringkörpers, sondern auch die Nachbearbeitung der im Reibschluss stehenden Gegenflächen. Die Erfindung ermöglicht somit zugleich eine günstigere Herstellung beispielsweise eines äußeren und inneren Synchronrings.

Durch die axiale Verschiebbarkeit und Verdrehbarkeit der Reibelemente wird erreicht, dass der Ring sich nicht nur über einige, wenige Punkte an seinen Gegenflächen abstützt, sondern über alle Reibelemente. Damit wird auch eine höhere Tragfähigkeit bzw. Leistungsfähigkeit der Reibkupplung erreicht.

Die Ausnehmungen des Synchronrings sind als Taschen oder Fenster der Form der Reibelemente angepasst. In einer Weiterbildung der Erfindung sind die Taschen größer als die Reibelemente ausgebildet und weisen an zumindest einer Seite Haltenasen auf, welche die Reibelemente führen.

In einer vorteilhaften Ausführungsform der Erfindung ist der Ringkörper spanlos und umformtechnisch aus Blech hergestellt. In diesem Fall ist es vorteilhaft, die Ausnehmungen in den Ringkörper einzubringen, bevor der Synchronring beispielsweise durch Tiefziehen in seine endgültige Form gebracht wird. In besonders einfacher Weise wird dünnwandiges Blechmaterial verwendet, aus dem die Ausnehmungen ausgestanzt werden. Alternativ ist es möglich, den Ringkörper aus Kunststoff herzustellen.

Die Reibelemente werden separat von dem Ringkörper hergestellt und gleichzeitig oder nacheinander maschinell mit dem Ringkörper verbunden. Sie können sehr kostengünstig hergestellt werden, da es in der Massenfertigung nicht auf genaue Maßhaltigkeit ankommt, da die Fertigungsungenauigkeiten durch die erfindungsgemäße Anordnung kompensiert werden.

In einer Weiterbildung der Erfindung weisen die Reibelemente eine konvexe Oberfläche auf. Sie können beispielsweise sphärisch nach außen sowie innen gewölbt sein, wobei die Krümmung in radialer Richtung nicht wesentlich von der des Synchronringes abweicht. Die konvexe Form vermeidet ein Abstützen der Reibkörper bei Verkippen an Körperkanten, so dass durch eine flächenförmige Anlage die lokalen Belastungen sinken.

In einer weiteren Ausbildungsform weisen die Ausnehmungen Nasen auf, über die die Reibelemente mit dem Ringkörper verbunden sind. Diese Nasen können auch als ein oder mehrere Haltepunkte allgemein ausgebildet sein. Bei der Herstellung durch Stanzen lassen sich auch komplexe Formen einfach realisieren. Alternativ dazu weisen die Reibelemente Vorsprünge auf, über die der Reibkörper mit dem Ringkörper in Wirkverbindung steht.

Die Erfindung ermöglicht weiterhin, dass für verschiedene Einsatzzwecke der gleiche Ringkörper verwendet werden kann. Für die jeweilige Anwendung können dann gemäß dem Baukastenprinzip jeweils die geeigneten Reibelemente zugepaart werden. Abweichend von bisherigen beschichteten Zwischenringen lassen sich erfindungsgemäß auch verschiedene Reibmaterialien auf einfache Weise in derselben Synchronisiereinrichtung verwenden. Dazu werden Reibelemente aus verschiedenen Werkstoffen jeweils abwechselnd in die Ausnehmungen platziert.

Als geeignete Werkstoffe für die Reibelemente haben sich vor allem Sintermaterial, aus Messingmaterial oder aus Karbon erwiesen. Die Reibelemente können entweder ganz aus dem Reibmaterial bestehen. Sie können aber auch aus einem Werkstoff aufgebaut sein, der mit einem anderen Werkstoff beschichtet wird.

In einer Weiterbildung der Erfindung sind die Reibelemente im verbauten Zustand voneinander in Umfangsrichtung beabstandet. Dadurch sind von den axialen Enden des Synchronrings jeweils in axialer Richtung verlaufend Nuten gebildet. Die Nuten dienen zur Aufnahme des Öls, welches bei dem Synchronisationsprozess abgeführt werden muss. Um die Ölabfuhr während der Synchronisierung zu unterstützen, sind die Reibelemente in einer anderen Weiterbildung der Erfindung mit Strukturflächen versehen. Die Strukturflächen dienen ebenfalls der Verbesserung der tribologischen Eigenschaften. Hierbei kann es sich beispielsweise um kreuzweise eingebrachte kleine Ölrillen handeln.

Gemäß Anspruch 9 weisen die Reibelemente eine Rautenform auf, die nicht rechteckig ist. Die Nuten verlaufen somit schräg zur Axialrichtung, was bei dem rotierenden Synchronring die Ölabfuhr beschleunigt. Nach Anspruch 10 kann dies noch dadurch unterstützt werden, dass sich die Nuten zu einem axialen Ende verbreitern. Dies wird dadurch erreicht, dass die Reibelemente eine unregelmäßige Viereckform in Form eines gescherten Trapezes aufweisen.

Die Erfindung betrifft auch eine Synchronisierung mit zumindest einem Synchronring nach Anspruch 1 und einem eine Gegenreibfläche aufweisenden Gegenkonus. Der Gegenkonus kann beispielsweise direkt am Gangrad angeordnet sein oder aber auch direkt am Synchronkörper. Durch die Bewegungsfreiheit in dem Ringkörper können auch Fertigungsungenauigkeiten dieser Gegenflächen aufgenommen werden, so dass es nicht erforderlich ist, diese nachzubearbeiten. Hierdurch wird eine Kostenersparnis ebenfalls bei den anderen Bauteilen der Synchronisiereinrichtung erreicht.

Die Erfindung ermöglicht es somit, ein einfacher Weise, einen Reibring für eine Synchronisierung bereitzustellen, der an vielen Stellen gleichzeitig trägt und somit einen geringen Verschleiß und ein gutes Einlaufverhalten aufweist.

### Kurze Beschreibung der Zeichnungen

Die Erfindung wird nachfolgend anhand mehrerer Zeichnungen erläutert. Es zeigen:
- Figur 1: einen Querschnitt einer Synchronisiereinrichtung,
- Figur 2: einen Querschnitt einer erfindungsgemäßen Synchronisiereinrich- tung mit einem Synchronaußenring, einem Zwischenring und ei- nem inneren Synchronring,
- Figur 3: eine perspektivische Ansicht des Ringkörpers eines Zwischenrin- ges ohne Reibelemente,
- Figur 4: eine perspektivische Ansicht des Ringkörpers eines anderen Zwi- schenringes mit Reibelementen und
- Figur 5: ein einzelnes Reibelement.

### Detaillierte Beschreibung der Zeichnungen

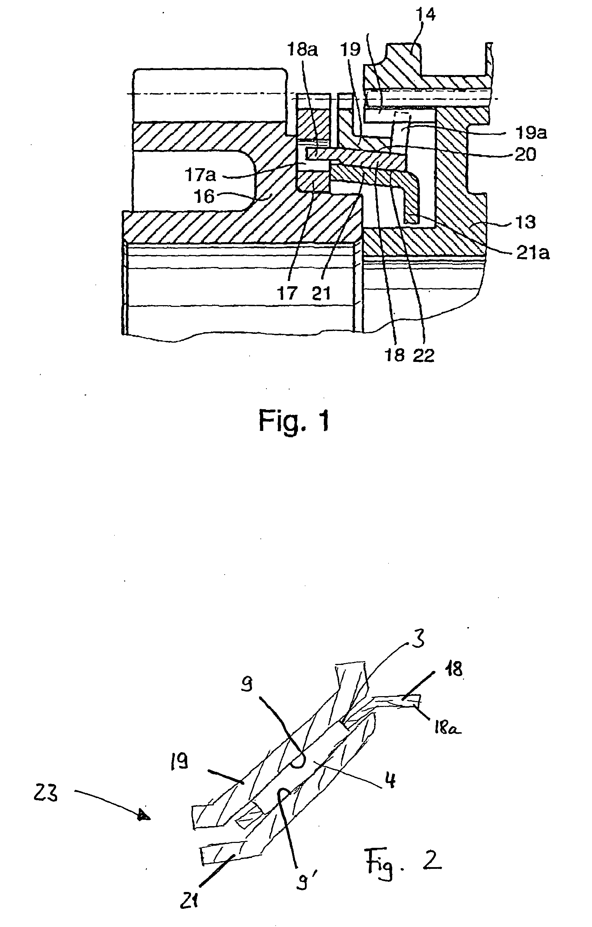

Figur 1 zeigt beispielhaft eine Synchronisiereinrichtung mit einem äußeren Synchronring 19, einem Synchronzwischenring 18 und einem inneren Synchronring 21. Ein Synchronkörper 13 ist mit einer Innenverzahnung zur verdrehfesten Anordnung auf einer Getriebewelle fixiert. Neben dem Synchronkörper 13 ist ein Gangrad 16 angeordnet. Mit dem Gangrad 16 ist ein Kupplungskörper 17 verbunden, in dessen Aussparungen 17a Mitnehmernocken 18a eines Zwischenringes 18 eingreifen. Der Zwischenring 18 bildet mit der Gegenreibfläche 9 des äußeren Synchronrings 19 als ein Gegenkonus 8 eine erste Reibpaarung 20 und mit der Gegenreibfläche 9' des inneren Synchronrings 21 eine zweite Reibpaarung 22. Die Gegenreibflächen 9 und 9' sind nicht nachbearbeitet. Die Verbindung vom Gangrad 16 und Synchronkörper 13 erfolgt über die Schiebemuffe 14.

Der Innenbord 21 a des inneren Synchronrings 21 ist von Aussparungen unterbrochen und teilweise durch einen Absatz des Synchronkörpers 13 verdeckt. Der Absatz greift in die Aussparungen ein, und der innere Synchronring 21 ist somit formschlüssig mit dem Synchronkörper 13 verbunden. Der äußere Synchronring 19 ist über seinen Bord formschlüssig mit dem Synchronkörper 13 verbunden. Der Formschluss des äußeren Synchronrings 19 mit dem Synchronkörper 13 erfolgt über Aussparungen 19a seines Bordes.

Figur 2 zeigt ein Synchronringpaket 23, bestehend aus einem äußeren Synchronring 19, einem Zwischenring 18 und einem inneren Synchronring 21. Zwischen dem äußeren 19 und dem inneren 21 Synchronring sind Reibelemente 4 in Aussparungen 3 des Zwischenrings 18 angeordnet.

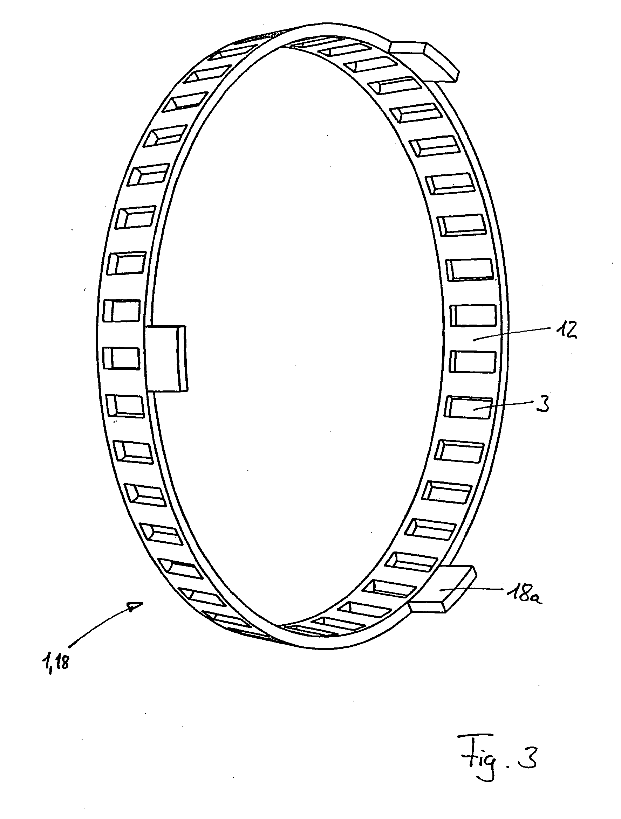

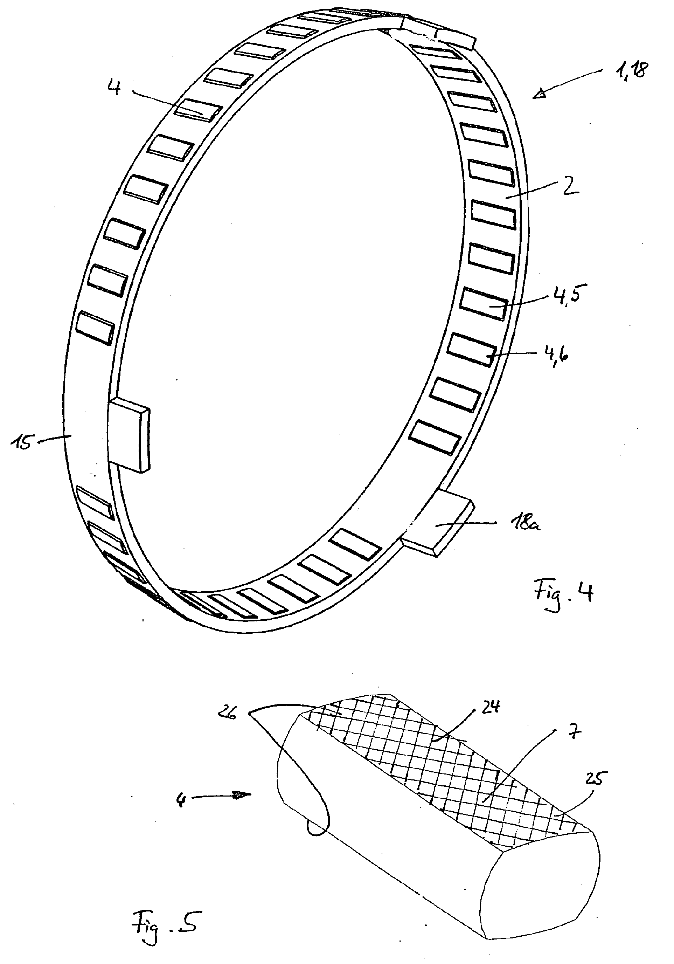

Die Figuren 3 und 4 zeigen jeweils einen Synchronring 1 als Zwischensynchronring 18 mit einem Ringkörper und Ausnehmungen 3, die nahezu rechteckförmig ausgebildet sind. Dabei sind die Ausnehmungen äquidistant angeordnet und verlaufen in axialer Richtung. Im Tragbereich 15 der Mitnehmernocken 18a fehlen bei dem Zwischensynchronring 18 der Figur 4 die Ausnehmungen 3, um die über die Mitnehmernocken 18a eingeleiteten Kräfte sicher aufnehmen zu können. Die Reibleistung wird dadurch nur unwesentlich gemindert. Zwischen den Ausnehmungen 3 bildet das Grundmaterial des Ringkörpers Nuten 12, die das Öl ableiten. Das Spiel der Reibelemente 4 in den Ausnehmungen beträgt etwa ein Millimeter.

Figur 5 zeigt ein Reibelement 4, das sphärisch gewölbt ist und eine Reibbeschichtung 25 aufweist. Das Reibelement 4 weist weiterhin auf seinen radial orientierten Flächen 25 Strukturflächen 7 mit Ölrillen 24 auf, welche das Öl fort führen.

**Bezugszahlenliste**
- 1: Synchronring
- 2: Ringkörper
- 3: Ausnehmung
- 4: Reibelement
- 5: erstes Reibelement
- 6: zweites Reibelement
- 7: Strukturfläche
- 8: Gegenkonus
- 9,9': Gegenreibfläche
- 10: axiales Ende
- 11: axiales Ende
- 12: Nut
- 13: Synchronkörper
- 14: Schiebemuffe
- 15: Tragbereich
- 16: Gangrad
- 17: Kupplungskörper
- 17a: Aussparung
- 18: Zwischenring
- 18a: Mitnehmernocken
- 19: äußerer Synchronring
- 19a: Aussparung
- 20: erste Reibpaarung
- 21: innerer Synchronring
- 21 a: Innenbord
- 22: zweite Reibpaarung
- 23: Synchronringpaket
- 24: Ölrille
- 25: Reibbeschichtung
- 26: radial orientierte Fläche

## Patentansprüche

1. Synchronring (1) für eine Synchronisiereinrichtung eines Kraftfahrzeuggetriebes mit einem Ringkörper (2), wobei der Ringkörper (2) mehrere Ausnehmungen (3) aufweist und in den Ausnehmungen (3) Reibelemente (4) angeordnet sind, **dadurch gekennzeichnet, dass** der Ringkörper (2) einen Käfig bildet, der die Reibelemente (4) in den Ausnehmungen (3) führt, wobei die Reibelemente (4) in den Ausnehmungen (3) verschiebbar und/oder verdrehbar angeordnet sind.

2. Synchronring nach Anspruch 1, **dadurch gekennzeichnet, dass** der Ringkörper (2) spanlos und umformtechnisch aus Blech oder aus Kunststoff hergestellt ist.

3. Synchronring nach Anspruch 1, **dadurch gekennzeichnet, dass** die Ausnehmungen (3) durch Stanzen hergestellt sind.

4. Synchronring nach Anspruch 1, **dadurch gekennzeichnet, dass** die Reibelemente (4) mit einer Beschichtung versehen sind.

5. Synchronring nach Anspruch 1, **dadurch gekennzeichnet, dass** die Reibelemente (4) eine konvexe Oberfläche aufweisen.

6. Synchronring nach Anspruch 1, **dadurch gekennzeichnet, dass** die Reibelemente (4) als erste Reibelemente (5) und zweite Reibelemente (6) aus verschiedenen Werkstoffen ausgebildet sind.

7. Synchronring nach Anspruch 1, **dadurch gekennzeichnet, dass** die Reibelemente (4) Strukturflächen (7) aufweisen.

8. Synchronring nach Anspruch 1, **dadurch gekennzeichnet, dass** die Reibelemente (4) voneinander beabstandet angeordnet sind, so dass von den axialen Enden (10, 11) des Synchronrings (1) Nuten (12) gebildet sind.

9. Synchronring nach Anspruch 8, **dadurch gekennzeichnet, dass** die Reibelemente (4) im Querschnitt eine nicht-rechteckige Rautenform aufweisen, so dass die Nuten (12) schräg zur Axialrichtung verlaufen.

10. Synchronring nach Anspruch 8, **dadurch gekennzeichnet, dass** die Reibelemente (4) ein unregelmäßige Viereckform (geschertes Trapez) aufweisen, so dass die Nuten (12) schräg zur Axialrichtung verlaufen und sich zu einem axialen Ende verbreitern.

11. Synchronisierung mit zumindest einem Synchronring nach Anspruch 1 und einem eine Gegenreibfläche (9) aufweisenden Gegenkonus (8), **dadurch gekennzeichnet, dass** die Gegenreibfläche (9) nicht nachbearbeitet ist.

## Claims

1. Synchro ring (1) ring for a synchromesh device of a motor vehicle transmission having an annular body (2), the annular body (2) comprising multiple recesses (3) and friction elements (4) being arranged in the recesses (3), **characterized in that** the annular body (2) forms a cage, which guides the friction elements (4) in the recesses (3), the friction elements (4) being displaceably and/or rotatably arranged in the recesses (3).

2. Synchro ring according to Claim 1, **characterized in that** the annular body (2) is manufactured from sheet metal or plastics by a chipless, forming process.

3. Synchro ring according to Claim 1, **characterized in that** the recesses (3) are produced by punching.

4. Synchro ring according to Claim 1, **characterized in that** the friction elements (4) are provided with a lining.

5. Synchro ring according to Claim 1, **characterized in that** the friction elements (4) have a convex surface.

6. Synchro ring according to Claim 1, **characterized in that** the friction elements (4) are formed as first friction elements (5) and second friction elements (6) of different materials.

7. Synchro ring according to Claim 1, **characterized in that** the friction elements (4) have structured faces (7).

8. Synchro ring according to Claim 1, **characterized in that** the friction elements (4) are spaced at a distance from one another, so that the axial ends (10, 11) of the synchro ring (1) form grooves (12).

9. Synchro ring according to Claim 8, **characterized in that** the friction elements (4) in cross section are of a non-rectangular, rhomboidal shape, so that the groves (12) run obliquely in relation to the axial direction.

10. Synchro ring according to Claim 8, **characterized in that** the friction elements (4) are of an irregular quadrilateral shape (truncated trapezium), so that the grooves (12) run obliquely in relation to the axial direction and widen out towards one axial end.

11. Synchromesh having at least one synchro ring according to Claim 1 and an opposing cone (8) having an opposing friction face (9), **characterized in that** the opposing friction face (9) is not machine-finished.

## Revendications

1. Bague de synchronisation (1) pour un dispositif de synchronisation d'une boîte de vitesses de véhicule automobile comprenant un corps de bague (2), le corps de bague (2) présentant plusieurs évidements (3) et des éléments de friction (4) étant disposés dans les évidements (3), **caractérisée en ce que** le corps de bague (2) forme une cage qui guide les éléments de friction (4) dans les évidements (3), les éléments de friction (4) étant disposés dans les évidements (3) de manière à pouvoir coulisser et/ou tourner.

2. Bague de synchronisation selon la revendication 1, **caractérisée en ce que** le corps de bague (2) est fabriqué en tôle ou en matière plastique sans enlèvement de copeaux et par technique de façonnage.

3. Bague de synchronisation selon la revendication 1, **caractérisée en ce que** les évidements (3) sont réalisés par poinçonnage.

4. Bague de synchronisation selon la revendication 1, **caractérisée en ce que** les éléments de friction (4) sont munis d'un revêtement.

5. Bague de synchronisation selon la revendication 1, **caractérisée en ce que** les éléments de friction (4) présentent une surface convexe.

6. Bague de synchronisation selon la revendication 1, **caractérisée en ce que** les éléments de friction (4) sont réalisés sous la forme de premiers éléments de friction (5) et de deuxièmes éléments de friction (6) dans des matériaux différents.

7. Bague de synchronisation selon la revendication 1, **caractérisée en ce que** les éléments de friction (4) présentent des surfaces structurées (7).

8. Bague de synchronisation selon la revendication 1, **caractérisée en ce que** les éléments de friction (4) sont disposés espacés les uns des autres de telle sorte que des rainures (12) sont formées par les extrémités axiales (10, 11) de la bague de synchronisation (1).

9. Bague de synchronisation selon la revendication 8, **caractérisée en ce que** les éléments de friction (4) présentent en section transversale la forme d'un losange non parallélépipédique, de sorte que les rainures (12) s'étendent en biais par rapport au sens axial.

10. Bague de synchronisation selon la revendication 8, **caractérisée en ce que** les éléments de friction (4) présentent la forme d'un quadrilatère irrégulier (trapèze coupé), de sorte que les rainures (12) s'étendent en biais par rapport au sens axial et s'élargissent vers une extrémité axiale.

11. Dispositif de synchronisation comprenant au moins une bague de synchronisation selon la revendication 1 et un contre-cône (8) présentant une surface de friction homologue (9), **caractérisé en ce que** la surface de friction homologue (9) n'est pas réusinée.
